# EUROPEAN PATENT SPECIFICATION

(11) **EP 2 127 931 B1**
(45) Date of publication and mention of the grant of the patent: **10.10.2012**
(21) Application number: 09004408.2
(22) Date of filing: 26.03.2009
(51) Int. Cl.: B60K 5/12

(54) **Engine suspending structure for vehicle**
Motoraufhängungsstruktur für Fahrzeug
Structure de suspension de moteur pour véhicule

(30) Priority: 30.05.2008 JP 2008143475
(43) Date of publication of application: 02.12.2009
(73) Proprietor: Yamaha Hatsudoki Kabushiki Kaisha, Shizuoka-ken Shizuoka 438-8501 (JP)
(72) Inventor: Uemura, Keisuke c/o Yamaha Hatsudoki Kabushiki Kaisha, Iwata-shi Shizuoka-ken 438-8501 (JP); Suzuki, Yoshihiro c/o Yamaha Hatsudoki Kabushiki Kaisha, Iwata-shi Shizuoka-ken 438-8501 (JP); Kiuchi, Minoru c/o Yamaha Hatsudoki Kabushiki Kaisha, Iwata-shi Shizuoka-ken 438-8501 (JP)
(74) Representative: Grünecker, Kinkeldey, Stockmair & Schwanhäusser

(56) References cited:
- US-A- 4 392 542
- US-A- 4 465 157

## Description

The present invention relates to an engine suspending structure for a vehicle by which an engine can be mounted on a body frame of, for example, a motorcycle.

As an engine suspending structure for mounting an engine on a body frame in a motorcycle, there is one that is described in JP-UM-B-60-10594. In the engine suspending structure, a collar in which an elastic nozzle is fitted is inserted in a suspension hole formed at an engine case side, an elastic tube is inserted in the collar, a suspension bolt is inserted in the elastic tube, and the both ends of the bolt is inserted into the suspension hole of the body frame for fastening. Herewith, vibration of the suspension bolt can be restrained.

Incidentally, in the aforementioned conventional engine suspending structure, since the elastic tube is inserted in the collar and the bolt is inserted in the elastic tube, it is necessary to manage the size of the parts so that the elastic tube is tightly adhered on the inner circumference of the collar and the outer circumference of the suspension bolt. However, when constituted to satisfy such a size relationship, there is a problem in that the elastic tube is easily turned inside, and assembling workability is low when the suspension bolt is inserted in the elastic tube. The present invention is made in the light of the conventional background.

An engine suspension structure according to the preamble of claim 1 is known from US 4 465 157.

It is an objective of the present invention to provide an engine suspending structure for a vehicle which makes it possible to improve assembling workability.

According to the present invention, said objective is solved by an engine suspending structure for a vehicle, in particular a motorcycle, comprising: a fixing member, a first fixing part and a second fixing part, which are configured to fix an engine on a body frame of the vehicle, said first fixing part and said second fixing part being formed at opposite sides of the fixing member in longitudinal direction, a damping member provided between the first fixing part and the second fixing part, the damping member including a through hole in which the fixing member is inserted and at least one projection contacting with the fixing member, said projection being formed on an inner surface of the through hole, and at least one space formed between a part of the inner surface of the through hole except the projection and the fixing member when viewed from an insertion direction of the fixing member.

Accordingly, the projection formed on the through hole of the damping member is made contact with the fixing member. Accordingly, vibration of the fixing member due to an engine vibration can be restrained, and fatigue breakage of the suspending member due to sympathetic vibration can be prevented.

Further, since a space is provided between a part of an inner surface of the through hole at which there is no projection and the fixing member, when the fixing member is inserted in the damping member, turning of the damping member by the fixing member can be prevented, and the insertion of the fixing member in the damping member becomes easy, and assembly can be improved.

Preferably, a plurality of projections is provided along an outer circumference of the fixing member, and, preferably, the projections are separated by spaces.

Further, preferably the through hole of the damping member has a concave part configured to guide the fixing member during its insertion.

Still further, preferably the concave part of the damping member is formed at an opposite side of the projection of the through hole.

Yet further still, preferably the damping member is disposed at a portion between a maximum amplitude point in a primary vibration mode and a maximum amplitude point in a secondary vibration mode of the fixing member.

Preferably, a plurality of damping members is provided in longitudinal direction of the fixing member.

Further, preferably the damping members are disposed at a maximum amplitude point in a primary vibration mode and a maximum amplitude point in a secondary vibration mode of the fixing member.

Still further, preferably the projection of the damping member comprises an outer projection formed on an outer surface of the damping member so as to project outside.

According to the present invention, said objective is also solved by a vehicle, in particular motorcycle, having a body frame and an engine fixed on the body frame by means of an engine suspending structure according to one of the above embodiments.

Preferably, the damping member of the engine suspending structure is fixed to the engine via an attachment bracket.

Further, preferably the attachment bracket has a clearance hole, in which a drain bolt of the engine is located.

Still further, preferably the fixing member of the engine suspending structure comprises a suspension bolt supported by the body frame so as to suspend the engine.

Preferably, the fixing member of the engine suspending structure fixes a rear part of the engine to the body frame, preferably to a rear arm bracket part of the body frame of the motorcycle.

Further, preferably the outer projection is tucked inside when the damping member is engaged in a suspension hole of the engine.

Still further, preferably the suspension hole, in which the damping member is engaged, is groove-like and, preferably, is formed on the engine in an axis right angle direction with regard to an outside surface thereof.

In the following, the present invention is explained in greater detail by means of embodiments thereof in conjunction with the accompanying drawings, wherein:
- Fig. 1: is a left side view of a motorcycle equipped with an engine suspending structure according to an embodiment;
- Fig. 2: is a left side view showing an engine suspension part of the motorcycle;
- Fig. 3: is a bottom view (fragmentary view III of Fig. 2) of a crank case bottom part showing the engine suspending structure;
- Fig. 4: is a cross sectional view (cross sectional view taken along the line IV-IV of Fig. 3) showing the engine suspending structure;
- Fig. 5: is a front view of a damping member in the engine suspending structure;
- Fig. 6: is a plan view of the damping member;
- Fig. 7: is the side view of the damping member;
- Fig. 8: is a diagram for illustrating an insertion operation of a lower suspension bolt of the engine suspending structure;
- Fig. 9: is a plan view of an attachment bracket of the engine suspending structure;
- Fig. 10: is a side view of the attachment bracket; and
- Fig. 11: is a diagram of vibration mode property for illustrating an arrangement position of the damping member in the engine suspending structure.

Among others, the following reference signs are used in the figures:
- 1:: motorcycle (vehicle)
- 2:: body frame
- 8:: engine
- 8i:: suspension groove (groove-like suspension hole)
- 14:: suspension bolt (fixing member)
- 18a:: first fixing part
- 18b:: second fixing part
- 19:: damping member
- 19c:: through hole
- 19d, 19e':: projection
- 19e:: outer projection
- 19f:: concave part
- 20:: attachment bracket
- a:: primary vibration mode
- a1:: maximum amplitude point
- b:: secondary vibration mode
- b1:: maximum amplitude point
- d:: space
- e:: axis line of suspension bolt

Hereinafter, an embodiment will be described with reference to the accompanying drawings.

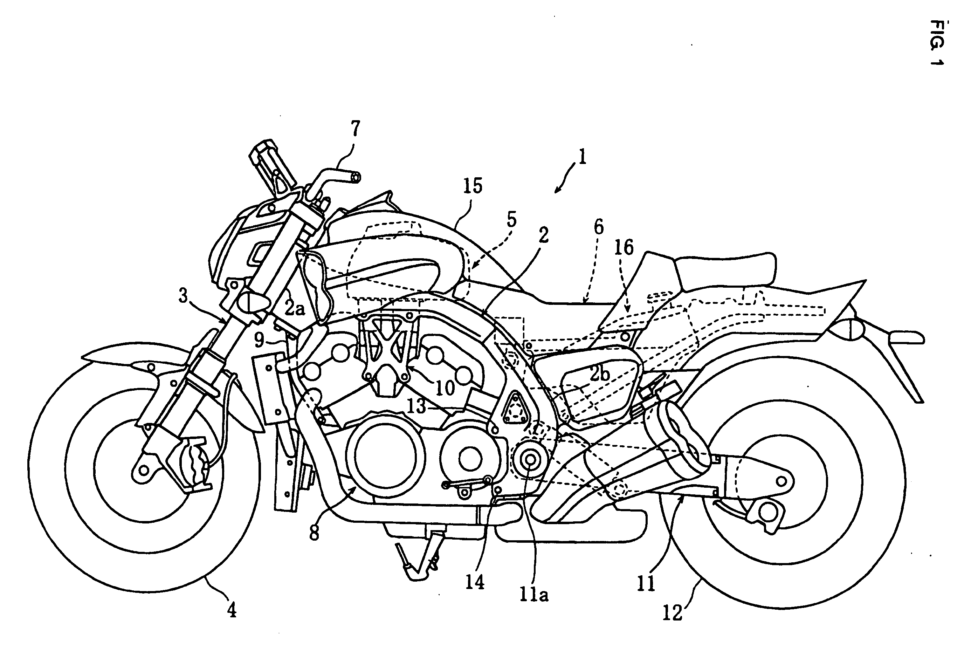

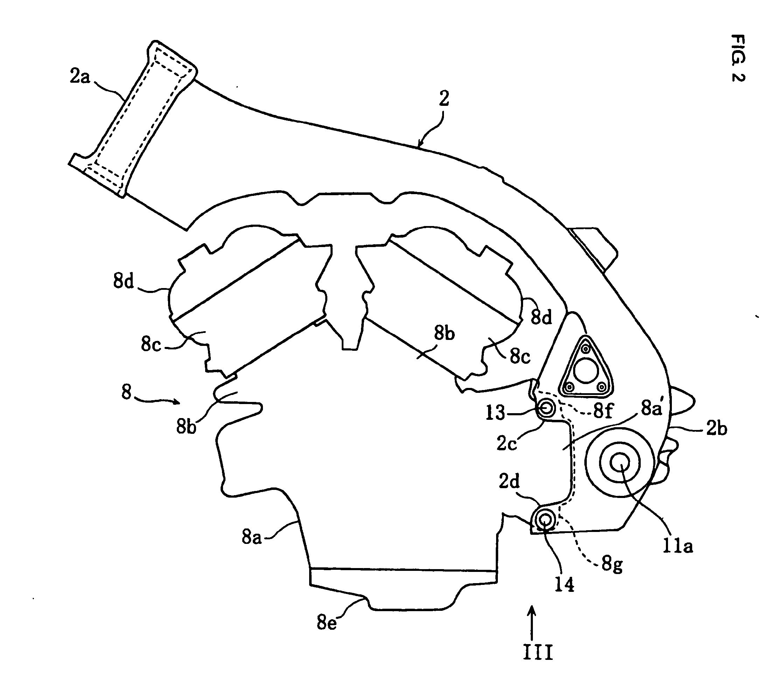

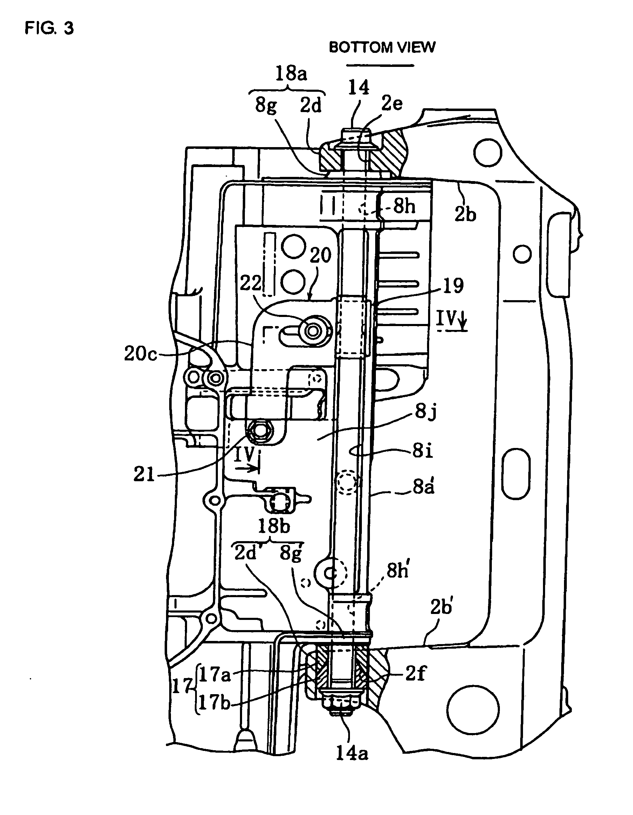

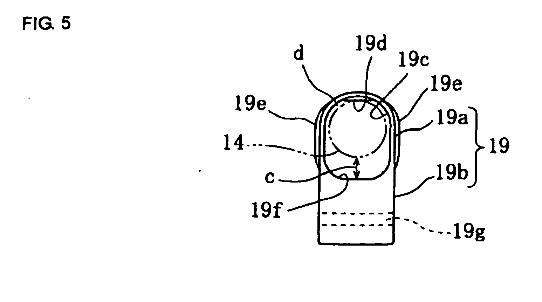

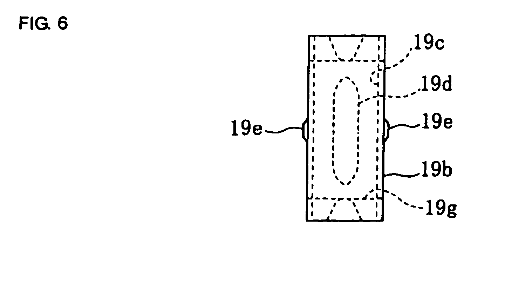

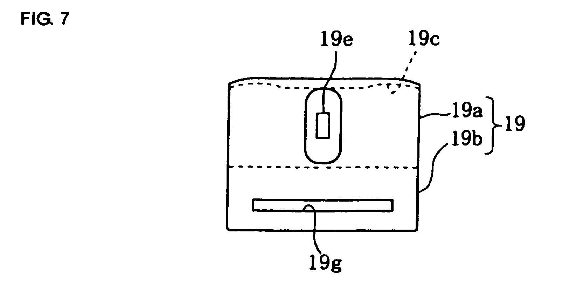

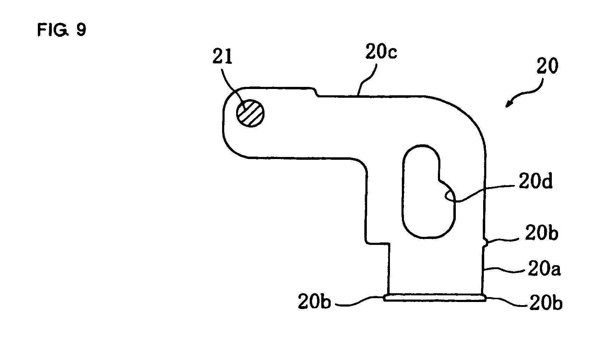

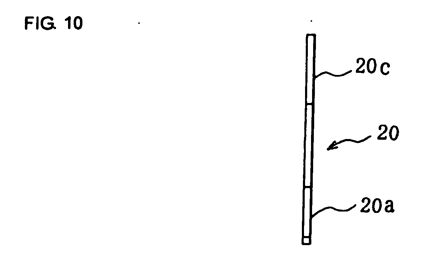

Figs. 1 to Fig. 11 are diagrams for illustrating a motorcycle according to an embodiment. Note that, in the embodiment, front and rear, right and left mean front and rear, right and left when viewing in a seated state on a seat as far as there is no specific description. Note that Fig. 3 is a bottom view, so that right and left is reversed as compared with the case of a plan view.

In the drawing, 1 denotes a motorcycle equipped with a structure of the embodiment, and the motorcycle 1 has an outline structure to be described below.

A front fork 3 is supported by a head pipe 2a of a front end of a body frame 2 with flexible right-and-left steering, and a front wheel 4 is pivotally supported at a lower end of the front fork 3, and a steering handle 7 is fixed at an upper end of the front fork 3. Further, an engine 8 of a water-cooled four cycle V-type four-cylinder type is mounded on the body frame 2. An air cleaner 5 is mounted above the engine 8, and is covered with a cover 15. A sheet 6 is mounted behind the cover 15, and a fuel tank 16 is mounted below the sheet 6. Further, a rear arm 11 is supported by a rear arm bracket part 2b of the body frame 2 in a vertically oscillating manner around a pivot axis 11a, and a rear wheel 12 is pivotally supported at a rear end of the rear arm 11.

The engine 8 is suspended to the body frame 2 by a front side suspension bracket 9, a center suspension bracket 10, and the aforementioned rear arm bracket parts 2b, 2b. The engine 8 is integrally formed at an upper part of a crank case 8a so that front and rear cylinder blocks 8b from a V-bank. The engine 8 has an outline structure in which a cylinder head 8c and a head cover 8d are mounted on the cylinder block 8b. Note that 8e denotes an oil pan fitted on a bottom surface of the crank case 8a.

Then, an upper boss part 8f and a lower boss part 8g formed at an upper edge and a lower edge of a rear end 8a' of the crank case 8a are fixed to an upper suspension part 2c and a lower suspension part 2d formed in the rear arm bracket part 2b with an upper suspension bolt 13 and a lower suspension bolt (fixing member) 14.

The present teaching is applied to the lower boss part 8g, the lower suspension part 2d, and the lower suspension bolt 14. Note that the present teaching can be additionally or alternatively applied to the upper boss part 8f, the upper suspension part 2c, and the upper suspension bolt 13.

Bolt holes 8h, 8h' are penetrated and formed in the left and right lower boss parts 8g, 8g'. Then, a suspension groove (suspension hole) 8i is formed at a part between the right and left boss parts 8g, 8g' of the rear end 8a' of a bottom surface 8j of the crank case 8a so as to form an U character groove shape and to have the same axis as the bolt holes 8h, 8h'.

Further, a bolt hole 2e and a wedge hole 2f are formed in the right and right lower suspension parts 2d, 2d' to have the same axis as the bolt hole 8h. A wedge member 17 formed by a female 17a having a tapered hole and a mail 17b having a tapered part are inserted in the wedge hole 2f.

A washer part 14d is integrally formed at a head part 14c having a pentagon hole of the lower suspension bolt 14, and a tapered part 14b is formed at the distal part. Then, the lower suspension bolt 14 is inserted into the bolt hole 8h, the suspension groove 8i, the bolt hole 8h' and the wedge 17 from the left side of the bolt hole 2e side to project to the right side, and a nut 14a is screwed on the projection part. Herewith, the engine rear end is firmly suspended to the rear arm bracket part 2b with the aforementioned wedge member 17. In this case, a first fixing part 18a is constituted by the left side lower suspension part 2d and the lower boss part 8g, and a second fixing part 18b is constituted by the right side lower suspension part 2d' and the lower boss part 8g'.

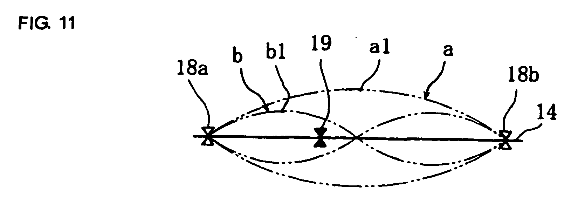

A damping member 19 is fitted at a part between the first fixing part 18a and the second fixing part 18b of the lower suspension bolt 14. To be more specific, the damping member 19 is fitted at the center part of the maximum amplitude point a1 in a primary vibration mode a and the maximum amplitude point b1 in a secondary vibration mode b of the lower suspension bolt 14 as shown in Fig. 11.

Note that a plurality of the damping members 19 may be provided. By providing a plurality of the damping members 19, the damping member can be disposed at the maximum amplitude point in each vibration mode. For example, when two damping members are provided, it is preferable to provide at the maximum amplitude point a1 in the primary vibration mode and the maximum amplitude point b1 in the secondary vibration mode b. Herewith, sympathetic vibration in the primary and secondary vibration modes can be surely prevented.

The damping member 19 has an approximately rectangular solid shape like a block shape constituted by an elastic member such as a rubber, and includes a damping part 19a having a nozzle shape, and a clumped attachment part 19b integrally formed at the lower side of the damping part 19a.

The damping part 19a has a through hole 19c having an inner diameter slightly larger than the diameter of the lower suspension bolt 14. Then, a concave part 19f forming a relief space c between with the lower suspension bolt 14 is formed at the lower side of the through hole 19c. Further, an upper projection 19d is formed at an upper part of the inner surface of the through hole 19 so that the upper projection 19d projects inside. Further, front and rear projections 19e, 19e' are formed on the outer surface of the through hole 19c so as to project outside.

Further, an attachment slit 19g is formed to pass through the attachment part 19b. A holding part 20a of an attachment bracket 20 made of a plate is inserted in the attachment slit 19g, and an engage piece 20b is protrusively provided on the holding part 20a. The engage piece 20b engages a marginal part of the attachment slit 19g of the damping member 19, and prevents detachment of the damping member 19.

Further, an attachment part 20c is formed in the attachment bracket 20 so as to make an L character shape with the holding part 20a. The attachment part 20c is fixed to the bottom surface 8j of the crank case 8a by an attachment bolt 21.

Note that 20d denotes a clearance hole, and is provided to escape an interference with a drain bolt 22 screwed on the bottom surface 8j of the crank case 8a. The drain bolt 22 is to be attached and detached through the clearance hole 20d.

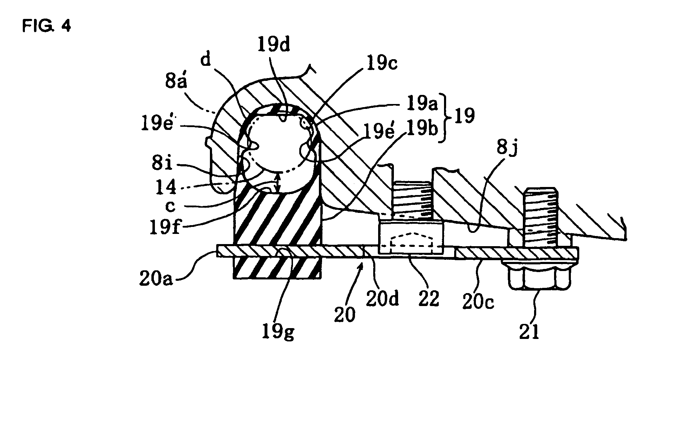

As shown in Fig. 4, if the attachment bracket 20 is fastened and fixed to the bottom surface 8j with the attachment bolt 21, the damping part 19a of the damping member 19 is brought into pressurized contact with the inner surface of the suspension groove 8i and the front and rear projection parts 19e are tucked inside, thereby parts corresponding the projections 19e of the through hole 19c are expanded inside and inner projections 19', 19' are formed.

Then, when the lower suspension bolt 14 is inserted in the through hole 19c, the upper projection 19d, and inner projection 19e', 19e' are brought into pressurized contact with the outer surface of the lower suspension bolt 14. Further, in this state, a space d is formed between the outer surface of the lower suspension bolt 14 and a part of the through hole 19c at which the upper projection 19d and inner side projections 19e' are absence. This way, preferably, the space d separates adjacent projections 19d, 19e' in circumferential direction of the lower suspension bolt 14.

In the structure of the embodiment, the damping member 19 is fitted at a part between the first fixing part 18a and the second fixing part 18b of the lower suspension bolt 14, and the upper projection 19d and the inner projections 19e', 19e' of the damping member 19 are made contact with the lower suspension bolt 14. Accordingly, vibration of the suspension bolt 14 due to an engine vibration can be restrained, and fatigue breakage of the lower suspension bolt 14 due to sympathetic vibration can be prevented.

The inner projection 19e' of the damping member 19 is to be formed by expansion of the inner surface when the outer projection 19e formed on the outer surface of the damping member 19 is engaged in and brought into pressurized contact with the suspension groove 8i at the engine side. Accordingly, the projection 19e' is to be gently projected along the axis line of the through hole 19c. Also in this point, the operation for inserting the lower suspension bolt 14 in the through hole 19c can be facilitated.

Further, since the damping member 19 is disposed at the middle point of the maximum amplitude point a1 in the primary vibration mode a and the maximum amplitude point b1 in the secondary vibration mode b, a primary vibration and a secondary vibration can be reduced by one damping member 19, and fatigue breakage due to sympathetic vibration of the lower suspension bolt 14 can be more surely prevented.

Since the upper projection 19d and the projections 19e', 19e' are provided along the outer circumference of the lower suspension bolt 14, even when the lower suspension bolt 14 has a manufacturing error so as to be expanded in the lower side and expanded in the left side or right side in Fig. 4, any of the projections is to be made contact with the lower suspension bolt 14. Accordingly the aforementioned damping effect can be obtained. Incidentally, for example, when equipped with only the upper projection 19d, when the lower suspension bolt 14 has a manufacturing error so as to be expanded in the lower side, there is a possibility that the upper projection 19d does not make contact with the lower suspension bolt 14.

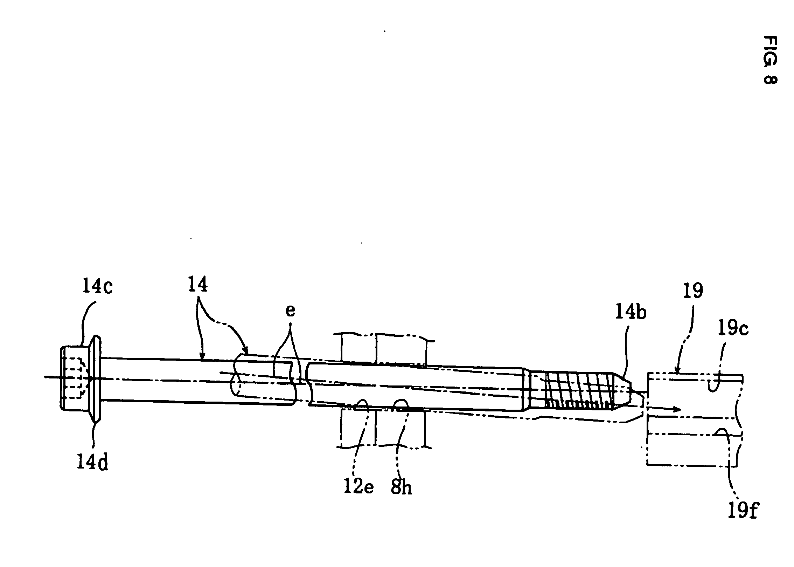

Further, there is the space d at a part of the through hole 19c at which the projections 19d, 19e' are not formed. Accordingly, when the lower suspension bolt 14 is inserted in the through hole 19c of the damping member 19, a fear that a margin part of the through hole 19c is turned by the suspension bolt 14 is low and assembling workability can be improved. Further, since the concave part 19f is formed at the lower side of the through hole 19c, by inserting the suspension bolt 14 so that the axis line e thereof is oriented in a slightly slanted downward direction as shown in Fig. 8 by the two dotted chain line when the suspension bolt 14 is inserted in the damping member 19, the suspension bolt 14 can be further easily inserted in the damping member 19. Furthermore, since the tapered part 14b is formed at the distal end of the lower suspension bolt 14, the bolt 14 can be easily inserted in the damping member 14 also in this point.

Further, the structure is employed in which the damping member 19 is brought into pressurized contact with the suspension groove 8i having a U character groove shape opened in the lower direction from the lower side. Accordingly, fitting of the damping member 19 is easy. Further, since the damping member 19 is fixed on the bottom wall 8j of the crank case 8a in a detachable manner via the attachment bracket 20, attachment and detachment operations of the damping member is easy.

Note that in the aforementioned embodiment, the case is described in which only one damping member 19 is provided. However, a plurality of damping members 19 may be provided along the axis line e of the suspension bolt 14. For example, when two damping members 19 are provided, it is preferable to dispose the damping members 19 at the maximum amplitude point a1 in the primary vibration mode a and the maximum amplitude point b1 in the secondary vibration mode b of the lower suspension bolt 14.

When the damping members 19 are provided in this manner, both of the primary vibration and the secondary vibration can be surely damped, and fatigue breakage of the lower suspension bolt 14 can be further surely prevented.

Further, when forming the projection, the projection is formed inside by bringing the projection formed outside into pressurized contact with the suspension groove to tuck inside. However, it goes without saying that the projection may be directly formed on the inner surface of the through hole.

Further, the case is described in which the engine is suspended by the suspension bolt in the embodiment. However, the present teaching can also be applied to an engine fixing member except the suspension bolt. Further, the engine suspending structure of a motorcycle is described in the embodiment. However, the application scope of the structure is not limited to a motorcycle, and can also be applied to a suspension structure of an engine for, for example, a four wheeled vehicle for traveling on an irregular road and the like.

The description above discloses (among others) an embodiment of an engine suspending structure of a vehicle equipped with a body frame, an engine mounted on the body frame, and a fixing member for fixing the engine on the body frame, wherein a first fixing part and a second fixing part for fixing the engine on the body frame are formed at one side and the other side of the fixing member in a longitudinal direction, a damping member is provided between the first fixing part and the second fixing part of the fixing member, the damping member includes a through hole in which the fixing member is inserted, and a projection that is made contact with the fixing member, the projection being formed on an inner surface of the through hole, and a space is formed between a part of the inner surface of the through hole except the projection and the fixing member when viewed from an insertion direction of the fixing member.

Preferably, a plurality of the projections are provided along an outer circumference of the fixing member.

Further, preferably the through hole of the damping member has a concave part that guides the fixing member when inserting the fixing member.

Further, preferably the damping member is disposed at a portion between the maximum amplitude point in a primary vibration mode and the maximum amplitude point in a secondary vibration mode of the fixing member.

Further, preferably a plurality of the damping members are provided in the longitudinal direction of the fixing member.

Further, preferably the damping members are disposed at the maximum amplitude point in a primary vibration mode and the maximum amplitude point in a secondary vibration mode of the fixing bolt.

Further, preferably the projection of the damping member is an outer projection formed on an outer surface of the damping member and projected outside, and the outer projection projects inside from the inner surface when the damping member is engaged in a suspension hole at an engine side.

Further, preferably the damping member is fitted by engaging the damping member in a groove-like suspension hole formed on the engine in an axis right angle direction from outside.

Further, preferably the damping member is fixed to the engine via a bracket.

Further, preferably the concave part of the damping member is formed at the side opposite to the side at which the projection of the through hole is formed.

Further, preferably the fixing member is a suspension bolt supported by the body frame and that suspends the engine.

Further, preferably the fixing member fixes a rear part of the engine.

Further, preferably a motorcycle is equipped with the engine suspending structure according to any of the preceding embodiments.

In order to provide an engine suspending structure of a vehicle capable of restraining vibration of a suspension bolt and improving assembling workability, and a motorcycle equipped with the engine suspending structure, an embodiment of an engine suspending structure of a vehicle 1 equipped with a body frame 2, an engine 8 mounted on the body frame 2, and a suspension bolt 14 for fixing the engine 8 on the body frame 2 is provided. A first fixing part 18a and a second fixing part 18b for fixing the engine 8 on the body frame 2 are formed at one side and the other side of the suspension bolt 14 in an axis direction, a damping member 19 is provided at a part between the first fixing part 18a and the second fixing part 18b of the suspension bolt 14, the damping member 19 includes a through hole 19c in which the suspension bolt 14 is inserted, and a projections 19d, 19e' that are made contact with the suspension bolt 14, the projections being formed on an inner surface of the through hole, and a space d is formed between a part of the inner surface of the through hole 19c except the projections 19d, 19e' and the suspension bolt 14.

## Claims

1. Engine suspending structure for a vehicle, in particular a motorcycle, comprising:
a fixing member (14), a first fixing part (18a) and a second fixing part (18b), which are configured to fix an engine (8) on a body frame (2) of the vehicle, said first fixing part (18a) and said second fixing part (18b) being formed at opposite sides of the fixing member (14) in longitudinal direction,
a damping member (19) provided between the first fixing part (18a) and the second fixing part (18b), the damping member (19) including, a through hole (19c) in which the fixing member (14) is inserted **characterized in that** at least one projection (19d,19e') contacting with the fixing member (14), said projection (19d,19e') being formed on an inner surface of the through hole (19c), and
at least one space (d) formed between a part of the inner surface of the through hole (19c) except the projection (19d,19e') and the fixing member (14) when viewed from an insertion direction of the fixing member (14).

2. Engine suspending structure according to claim 1, wherein a plurality of projections (19d,19e') is provided along an outer circumference of the fixing member (14), and, preferably, the projections (19d,19e') are separated by spaces (d).

3. Engine suspending structure according to claim 1 or 2, wherein the through hole (19c) of the damping member (19) has a concave part (19f) configured to guide the fixing member (14) during its insertion.

4. Engine suspending structure according to claim 3, wherein the concave part (19f) of the damping member (19) is formed at an opposite side of the projection (19d) of the through hole (19c).

5. Engine suspending structure according to one of claims 1 to 4, wherein the damping member (19) is disposed at a portion between a maximum amplitude point in a primary vibration mode and a maximum amplitude point in a secondary vibration mode of the fixing member (14).

6. Engine suspending structure according to one of claims 1 to 5, wherein a plurality of damping members (19) is provided in longitudinal direction of the fixing member (14).

7. Engine suspending structure according to claim 6, wherein the damping members (19) are disposed at a maximum amplitude point in a primary vibration mode and a maximum amplitude point in a secondary vibration mode of the fixing member (14).

8. Engine suspending structure according to one of claims 1 to 7, wherein the projection (19d,19e') of the damping member (19) comprises an outer projection (19e) formed on an outer surface of the damping member (19) so as to project outside.

9. Vehicle, in particular motorcycle, having a body frame (2) and an engine (8) fixed on the body frame (2) by means of an engine suspending structure according to one of claims 1 to 8.

10. Vehicle according to claim 9, wherein the damping member (19) of the engine suspending structure is fixed to the engine (8) via an attachment bracket (20).

11. Vehicle according to claim 10, wherein the attachment bracket (20) has a clearance hole (20d), in which a drain bolt (22) of the engine (8) is located.

12. Vehicle according to one of claims 9 to 11, wherein the fixing member (14) of the engine suspending structure comprises a suspension bolt supported by the body frame (2) so as to suspend the engine (8).

13. Vehicle according to one of claims 9 to 12, wherein the fixing member (14) of the engine suspending structure fixes a rear part of the engine (8) to the body frame (2), preferably to a rear arm bracket part (2b) of the body frame (2) of the motorcycle.

14. Vehicle according to one of claims 9 to 13, wherein the outer projection (19e) is tucked inside when the damping member (19) is engaged in a suspension hole (8i) of the engine (8).

15. Vehicle according to claim 14, wherein the suspension hole (8i), in which the damping member (19) is engaged, is groove-like and, preferably, is formed on the engine (8) in an axis right angle direction with regard to an outside surface thereof.

## Patentansprüche

1. Motoraufhängungsstruktur für ein Fahrzeug, insbesondere ein Motorrad, aufweisend:
ein Befestigungsteil (14), ein erstes Befestigungsteil (18a) und ein zweites Befestigungsteil (18b), die konfiguriert sind, eine Brennkraftmaschine (8) an einem Karosserierahmen (2) des Fahrzeuges zu befestigen, wobei das erste Befestigungsteil (18a) und das zweite Befestigungsteil (18b) auf gegenüberliegenden Seiten des Befestigungsteils (14) in Längsrichtung gebildet sind,
ein Dämpfungsteil (19), vorgesehen zwischen dem ersten Befestigungsteil (18a) und dem zweiten Befestigungsteil (18b), wobei das Dämpfungsteil (19) eine Durchgangsbohrung (19c) enthält, in die das Befestigungsteil (14) eingesetzt ist,
**dadurch gekennzeichnet, dass** zumindest ein Vorsprung (19d, 19e') mit dem Befestigungsteil (14) in Kontakt ist, der Vorsprung (19d, 19e') auf einer Innenoberfläche der Durchgangsbohrung (19c) ausgebildet ist und zumindest ein Raum (d) zwischen einem Teil der Innenoberfläche der Durchgangsbohrung (19c), mit Ausnahme des Vorsprungs (19d, 19e'), und dem Befestigungsteil (14), gebildet ist, wenn aus einer Einsetzrichtung des Befestigungsteils (14) gesehen.

2. Motoraufhängungsstruktur nach Anspruch 1, wobei eine Mehrzahl von Vorsprüngen (19d, 19e') entlang eines Außenumfanges des Befestigungsteils (14) vorgesehen ist und vorzugsweise die Vorsprünge (19d, 19e') durch Räume (d) getrennt sind.

3. Motoraufhängungsstruktur nach Anspruch 1 oder 2, wobei die Durchgangsbohrung (19c) des Dämpfungsteils (19) einen konkaven Teil (19f) hat, konfiguriert, das Befestigungsteil (14) während des Einsetzens zu führen.

4. Motoraufhängungsstruktur nach Anspruch 3, wobei das konkave Teil (19f) des Dämpfungsteils (19) auf gegenüberliegenden Seiten des Vorsprungs (19d, 19e') der Durchgangsbohrung (19c) gebildet ist.

5. Motoraufhängungsstruktur nach einem der Ansprüche 1 bis 4, wobei das Dämpfungsteil (19) an einem Abschnitt zwischen einem maximalen Amplitudepunkt in einem primären Schwingungsmodus und einem maximalen Amplitudepunkt in einem sekundären Schwingungsmodus des Befestigungsteils (14) angeordnet ist.

6. Motoraufhängungsstruktur nach einem der Ansprüche 1 bis 5, wobei eine Mehrzahl von Dämpfungsteilen (19) in Längsrichtung des Befestigungsteils (14) vorgesehen ist.

7. Motoraufhängungsstruktur nach Anspruch 6, wobei die Dämpfungsteile (19) an einem maximalen Amplitudepunkt in einem primären Schwingungsmodus und einem maximalen Amplitudepunkt in einem sekundären Schwingungsmodus des Befestigungsteils (14) angeordnet sind.

8. Motoraufhängungsstruktur nach einem der Ansprüche 1 bis 7, wobei der Vorsprung (19d, 19e') des Dämpfungsteils (19) aufweist einen äußeren Vorsprung (19e), gebildet auf einer Außenoberfläche des Dämpfungsteils (19), um nach au-βen vorzuspringen.

9. Fahrzeug, insbesondere ein Motorrad, mit einem Karosserierahmen (2) und einer Brennkraftmaschine (8), befestigt an dem Karosserierahmen (2) mittels der Motoraufhängungsstruktur nach einem der Ansprüche 1 bis 8.

10. Fahrzeug nach Anspruch 9, wobei das Dämpfungsteil (19) der Motoraufhängungsstruktur an der Brennkraftmaschine (8) über eine Verbindungsträger (20) befestigt ist.

11. Fahrzeug nach Anspruch 10, wobei die Verbindungsträger (20) eine Abstandsbohrung (20d) hat, in die eine Ablassschraube (22) der Brennkraftmaschine (8) angeordnet ist.

12. Fahrzeug nach einem der Ansprüche 9 bis 11, wobei das Befestigungsteil (14) der Motoraufhängungsstruktur eine Aufhängungsschraube aufweist, abgestützt durch den Karosserierahmen (2), um die Brennkraftmaschine (8) aufzuhängen.

13. Fahrzeug nach einem der Ansprüche 9 bis 12, wobei das Befestigungsteil (14) der Motoraufhängungsstruktur einen hinteren Teil der Brennkraftmaschine (8) an dem Karosserierahmen (2), vorzugsweise an einem hinteren Armträgerteil (2b) des Karosserierahmens (2) des Motorrades, befestigt.

14. Fahrzeug nach einem der Ansprüche 9 bis 13, wobei der äußere Vorsprung (19e) im Inneren gefaltet wird, wenn das Dämpfungsteil (19) in einer Aufhängungsbohrung (8i) der Brennkraftmaschine (8) im Eingriff ist.

15. Fahrzeug nach Anspruch 14, wobei die Aufhängungsbohrung (8i), in der das Dämpfungsteil (19) im Eingriff ist, nutartig ist und vorzugsweise an der Brennkraftmaschine (8) in einer rechtwinkligen Achsrichtung in Bezug auf eine äußere Oberfläche derselben gebildet ist.

## Revendications

1. Structure de suspension de moteur pour un véhicule, en particulier un motocycle, comprenant :
un organe de fixation (14), une première pièce de fixation (18a) et une seconde pièce de fixation (18b) qui sont conçues pour fixer un moteur (8) sur un cadre (2) du véhicule, la première pièce de fixation (18a) et la seconde pièce de fixation (18b) étant formées sur des côtés opposés de l'organe de fixation (14), dans le sens longitudinal,
un organe amortisseur (19) disposé entre la première pièce de fixation (18a) et la seconde pièce de fixation (18b), l'organe amortisseur (19) comprenant un trou traversant (19c) dans lequel l'organe de fixation (14) est introduit,
**caractérisée en ce qu'**au moins une saillie (19d, 19e') est en contact avec l'organe de fixation (14), ladite saillie (19d, 19e') étant formée sur une surface intérieure du trou traversant (19c), et
au moins un espace (d) est formé entre une partie de la surface intérieure du trou traversant (19c), à l'exception de la saillie (19d, 19e'), et l'organe de fixation (14), vu à partir d'un sens d'introduction de l'organe de fixation (14).

2. Structure de suspension de moteur selon la revendication 1, étant précisé que plusieurs saillies (19d, 19e') sont prévues le long d'une circonférence extérieure de l'organe de fixation (14), et que les saillies (19d, 19e') sont de préférence séparées par des espaces (d).

3. Structure de suspension de moteur selon la revendication 1 ou 2, étant précisé que le trou traversant (19c) de l'organe amortisseur (19) a une partie concave (19f) conçue pour guider l'organe de fixation (14) pendant son introduction.

4. Structure de suspension de moteur selon la revendication 3, étant précisé que la partie concave (19f) de l'organe amortisseur (19) est formée sur un côté opposé de la saillie (19d) du trou traversant (19c).

5. Structure de suspension de moteur selon l'une des revendications 1 à 4, étant précisé que l'organe amortisseur (19) est disposé sur une partie située entre un point d'amplitude maximum dans un mode de vibration primaire et un point d'amplitude maximum dans un mode de vibration secondaire de l'organe de fixation (14).

6. Structure de suspension de moteur selon l'une des revendications 1 à 5, étant précisé que plusieurs organes amortisseurs (19) sont prévus dans le sens longitudinal de l'organe de fixation (14).

7. Structure de suspension de moteur selon la revendication 6, étant précisé que les organes amortisseurs (19) sont disposés au niveau d'un point d'amplitude maximum dans un mode de vibration primaire et d'un point d'amplitude maximum dans un mode de vibration secondaire de l'organe de fixation (14).

8. Structure de suspension de moteur selon l'une des revendications 1 à 7, étant précisé que la saillie (19d, 19e') de l'organe amortisseur (19) comprend une saillie extérieure (19e) formée sur une surface extérieure de l'organe amortisseur (19) de manière à faire saillie vers l'extérieur.

9. Véhicule, en particulier motocycle, comportant un cadre (2) et un moteur (8) fixé sur le cadre (2) à l'aide d'une structure de suspension de moteur selon l'une des revendications 1 à 8.

10. Véhicule selon la revendication 9, étant précisé que l'organe amortisseur (19) de la structure de suspension de moteur est fixé au moteur (8) par l'intermédiaire d'un support de montage (20).

11. Véhicule selon la revendication 10, étant précisé que le support de montage (20) a un trou de dégagement (20d) dans lequel se trouve un boulon de vidange (22) du moteur (8).

12. Véhicule selon l'une des revendications 9 à 11, étant précisé que l'organe de fixation (14) de la structure de suspension de moteur comprend un boulon de suspension supporté par le cadre (2) en vue de la suspension du moteur (8).

13. Véhicule selon l'une des revendication 9 à 12, étant précisé que l'organe de fixation (14) de la structure de suspension de moteur fixe une partie arrière du moteur (8) au cadre (2), de préférence à une partie de support de bras oscillant (2b) du cadre (2) du motocycle.

14. véhicule selon l'une des revendications 9 à 13, étant précisé que la saillie extérieure (19e) est rentrée à l'intérieur quand l'organe amortisseur (19) est engagé dans un trou de suspension (8i) du moteur (8).

15. Véhicule selon la revendication 14, étant précisé que le trou de suspension (8i) dans lequel est engagé l'organe amortisseur (19) a la forme d'une rainure et est de préférence formé sur le moteur (8) à angle droit par rapport à une surface extérieure de celui-ci.
